# EUROPEAN PATENT APPLICATION

(11) **EP 2 575 036 A1**
(43) Date of publication of application: **03.04.2013**
(21) Application number: 11306264.0
(22) Date of filing: 30.09.2011
(51) Int. Cl.: G06F 9/445

(54) **Method for processing application data and corresponding first device**

(71) Applicant: Gemalto SA, 92190 Meudon (FR); Trusted Logic, 92190 Meudon (FR)
(72) Inventor: Bernabeu, Gil, 13420 Gemenos (FR); Vetillard, Eric, 92190 Meudon (FR)

(57) **Abstract**

The invention relates to a method for processing application data. A first device 10 stores data relating to at least one application.

According to the invention, the method comprises the following step. The first device deletes at least stored executable data relating to at least one application.

The invention also relates to a corresponding first device.

## Description

### Field of the invention:

The invention relates, in a general manner, to a method for processing application data.

Moreover, the invention also pertains to a first device for processing application data.

### State of the art:

US 6,438,559 B1 describes a solution for serializing Java objects in a distributed computing environment, like computers in a client/server network, for distributed applications.

However, a computer device has a low level of resource, in particular a limited amount of memory space, while having to manage one or several applications that the computer device supports.

There is therefore a need to manage, in a more efficient manner, an application(s) supported by a computer device, such as a Subscriber Identity Module (or SIM) type card.

### Summary of the invention:

The invention proposes a solution for satisfying the just herein above specified need by providing a method for processing application data. A first device stores data relating to at least one application.

According to the invention, the method comprises the following step. The first device deletes at least stored executable data relating to at least one application.

The principle of the invention consists in a removal (or deletion) of stored executable data relating to one or several applications supported by the first device.

It is to be noted that more than the stored executable data relating to one or several applications may also be removed or erased.

Contrary to the herein above described known solution, generally, most of the data relating to an application(s) stored within the (first) device, namely the executable data, is erased from an embedded memory registering the application(s).

Thus, the invention solution makes it possible to save memory space which is of particular importance when the concerned device has a restrained memory space. The thus saved memory space corresponds to the memory space that registered the executable data relating to the concerned processed application(s). The saved memory space may be re-allocated for storing other data.

Preferably, the first device stores at least a part of non-executable data relating to at least one application. Thus, just a portion of data relating to one or several applications is kept on board for a back-up of the concerned application(s) while another portion is deleted. The kept portion is composed of non-executable data relating to one or several applications which is preferentially specific to a first device user(s) and/or a use of the concerned application(s).

According to a further aspect, the invention is a first device for processing application data. The first device comprises means for storing data relating to at least one application.

According to the invention, the first device is adapted to delete at least stored executable data relating to at least one application.

As first device, it can be either a terminal, like a Personal Computer (or PC), a mobile (tele)phone, a Personal Digital Assistant (or PDA), a palm-top computer, a laptop computer, a netbook, a tablet computer, a game console, or a smart object, like an embedded chip, i.e. a chip soldered to a Printed Circuit Board (or PCB) of a terminal, a removable smart object, like a SIM type card or a smart dongle.

### Brief description of the drawings:

Additional features and advantages of the invention will be more clearly understandable after reading a detailed description of one preferred embodiment of the invention, given as an indicative and non-limitative example, in conjunction with the following drawings:

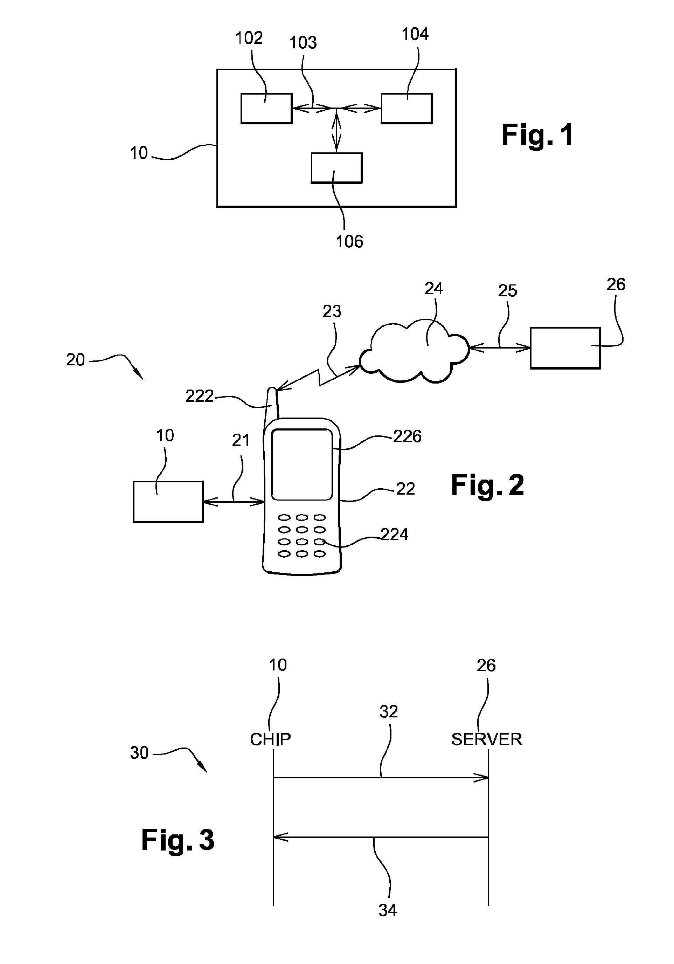

- Figure 1 illustrates a simplified diagram of one exemplary embodiment of a chip, as first device, for processing data relating to an application(s), the chip being adapted to delete stored executable data relating to the application(s), according to the invention;
- Figure 2 represents one exemplary embodiment of a system for processing data relating to an application(s), the system comprising the chip of figure 1 and a distant server, as second device, the server being used for receiving non-executable data relating to the application(s), as an archive file, originating from the chip; and
- Figure 3 is a simplified message flow of one exemplary embodiment of a method implemented notably by the chip and the server of figure 2, so that the chip sends to the server an on-the fly generated archive file while keeping on board a relatively minor volume of non-executable data relating to the application(s).

### Detailed description:

Figure 1 shows a chip 10, as first device for processing data relating to at least one application.

The chip 10, i.e. an integrated circuit, is a smart electronic object that is intended to communicate with the outside world.

The chip 10 may be incorporated within any electronic medium that may have different form factors, like, for instance, a Subscriber Identity Module (or SIM) type smart card, , like a Universal Integrated Circuit Card (or UICC), a Secure Digital (or SD) type card, a Multi-Media type Card (or MMC), a smart dongle of the USB (acronym for "Universal Serial Bus") type, or a chip to be fixed to a user terminal, as host device, possibly in a removable manner.

The chip 10 includes preferentially at least one microprocessor 102, as data processing means, at least one memory 104, as data storing means, and at least one Input/Output (or I/O) interface 106 which are internally linked together through a data and control bus 103.

The chip microprocessor 102 processes data originating from either the chip memory 104 or, through one or several chip I/O interface(s) 106, outside.

The chip memory 104 can be constituted by one or several EEPROMs (acronym for "Electrically Erasable Programmable Read-Only Memory"), one or several ROMs (for "Read Only Memory"), one or several Flash memories and/or any other memories of different types, like a RAM (for "Random Access Memory") type.

A SIM type application includes, among others, a SIM for a Global Service for Mobiles (or GSM) type network, a Universal Subscriber Identity Module (or USIM) for a mobile radio-communication network relating to a Universal Mobile Telecommunications System (or UMTS), a Code Division Multiple Access (or CDMA) Subscriber Identity Module (or CSIM) and/or an Internet protocol Multimedia Subsystem (or IMS) Subscriber Identity Module (or ISIM) application.

The chip memory 104 may store at least one SIM type application, for example, a SIM application(s) for a GSM network(s), a USIM application(s) for a UMTS network(s), a CSIM application(s) for a CDMA network(s), an ISIM application(s) for IMS and/or other application(s).

All the applications may be installed within the chip 10 either at the manufacturing of the chip 10 or, after a chip issuing, from a remote server during a chip personalization after a chip issuance.

The chip memory 104 may store user data, like a first name, a last name, a bank account number, a birth date, a private key, a Personal Identity Number (or PIN), one biometrics print(s) (like a fingerprint(s), a facial print(s) and/or an iris print(s)) and/or other appropriate personal data.

The chip memory 104 stores preferentially data for identifying the chip 10, such as an International Mobile Subscriber Identity (or IMSI) and/or an Integrated Circuit Card Identifier (or ICCID).

The chip memory 104 stores, for each application, on the one hand, executable data, also termed code, and, on the other hand, non-executable data relating both to the concerned application.

The concerned application may be written in an object-oriented language, such as Java, also termed applet when developed in Java. According to such a corresponding embodiment, the chip memory 104 stores a Java Virtual Machine (or JVM). The JVM interprets and executes the applet. In Java, each object is identified by its class, as an object type.

As executable data relating to the concerned application, there is data that is interpretable by the chip microprocessor 102.

According to one interesting feature of the invention, the chip 10 is arranged to delete at least stored executable data relating to one application or a plurality of applications.

Each application concerned by such a deletion is resident within the chip 10.

Most of the data relating to an application is generally executable data. Typically, executable data relating to an application represents around 80 per cent of all data relating to the application.

By removing the executable data relating to the concerned application(s) from the chip memory 104, the chip 10 frees most of a memory space that is allocated to store the application(s).

The part of the memory space that is thus freed becomes available for any data storage.

The chip user may select one embodiment amongst several proposed embodiments for managing one or several applications resident within the chip 10 by configuring a corresponding target application rendering such an application back-up flexible.

Such a target application provides the chip user with a control on the way of modifying a content of the chip 10.

The target application is preferably supported by the chip 10. The target application may be listed within either a menu, like a SIM ToolKit (or STK) type menu, or a page originating from a local server embedded within the chip 10, such as a Smart Card Web Server (or SCWS).

The target application may be included within an application to be processed and stored within the chip memory 104. In other words, the target application is part of an application to be managed by the chip microprocessor 102. When the target application is integrated within an application to be processed, the target application may define one or several parameters specific to the application to be processed, such as:
- a type of data relating to the application to be deleted from the chip memory 104;
- a type of non-executable data relating to the application to be kept on-board or exported;
- a type of non-executable data relating to the application to be referenced through a descriptor to be added, like an object to be specifically marked;
- a target memory space for a back-up of the application data;
- a memory address at which sensitive and/or non-sensitive non-executable data relation to the application to be processed is to be stored within the chip 10 and/or an external entity;
- a minimum memory size and/or a maximum memory size to be reserved for a back-up of the application data;
- a target memory space for a restoration of the backed-up application data; and/or
- a minimum memory size and/or a maximum memory size to be reserved for a restoration of the backed-up application data.

Alternately, the target application, as a standalone application dedicated to managing one or several applications resident at least within the chip 10, is supported by a remote server.

The target application allows better using the memory space of the chip memory 104 notably in a shortage situation.

According to a first embodiment, all non-executable data relating to the concerned application(s) is preserved or saved within the chip memory 104 while the corresponding executable data is deleted or erased. According to the first embodiment, the chip 10 supporting the concerned application(s) does not send any data relating to the concerned application(s) to an external entity, like a host terminal, a remote server or another smart chip.

As non-executable data relating to the concerned application(s), there is notably:
- data for referring to corresponding executable (application) data, as code references;
- non-executable data relating to an object(s), like data identifying an object(s), data allowing to link to other associated non-executable data, such as an object(s);
- applicative data (but not executable as such), like application parameters;
- application metadata, like an Application IDentifier (or AID) that is used for addressing an application that resides within the chip 10;
- personal data, as user private data;
- key(s) (or rights), confidential or secret data, as sensitive data, and, when applicable;
- non-executable data relating to an object(s) including sensitive data relating to an object(s), like a key(s).

The chip microprocessor 102 preferably executes security functions, in order to protect an access to information, like data stored and/or managed by the chip 10.

The security functions include preferably a user authentication application to be executed before accessing, in particular, data stored within the chip memory 104. To authenticate the user, the chip 10 may store an application for verifying a PIN or personal biometrics data stored securely within the chip 10 and to be input by the chip 10 user. Thus, the chip 10 compares data entered by the chip user with the stored PIN or personal biometrics data and authorize, when successful, a running of any application supported by the chip 10.

The security functions include preferentially an encryption/decryption process to be used before sending data to outside/after receiving data from outside, so as to protect access to the data managed by the chip 10. To encrypt data to be sent, the chip 10 uses a key that is stored within the chip memory 104 and an encryption algorithm, such as an Advanced Encryption Standard (or AES), a Data Encryption Standard (or DES) or the like. To decrypt data to be received, the chip 10 may use a key that is stored within the chip memory 104 and a decryption algorithm, such as an AES, a DES or the like.

The chip 10 plays notably a role of a safe for the thus saved non-executable data relating to the concerned application(s). To save, in a safe manner, the non-executable data relating to the concerned application(s), the chip 10 may move this latter from an original memory space to another memory space, as target memory space. The target memory space is predefined and is used for keeping non-executable data relating to an application(s).

A code reference(s) is(are) to be retrieved when the corresponding executable data is also to be retrieved, so as to re-assemble the non-executable data and corresponding executable data relating to the concerned application(s).

According to a second embodiment, the chip 10 is arranged to keep, in a persistent manner, only sensitive non-executable data relating to the concerned application(s), as part of non-executable (application) data, within the chip memory 104, while the corresponding executable data is deleted from the chip memory 104.

The chip memory 104 stores thus only a relatively minor volume of data.

The sensitive non-executable data may be a key(s), a PIN, a password(s) and/or other personal confidential data allowing a chip owner/user to access one or several services. Such a second embodiment allows registering, preferably in a secure manner, the concerned sensitive non-executable data relating to the concerned application(s) within the chip memory 104.

According to a third embodiment, besides a deletion of the executable data relating to the concerned application(s), the chip 10 is arranged to transfer the non-executable data relating to the concerned application(s) to a predetermined external target memory space. Thus, no data relating to the concerned application(s) is saved within the chip memory 104. The external target memory space may be under the control of either a host device or a distant server.

To register the concerned sensitive non-executable data relating to the concerned application(s), the chip 10 may be arranged to move the sensitive non-executable data from an original memory space to another memory space, as internal target memory space.

To register, in a secure manner, the concerned sensitive non-executable data relating to the concerned application(s), it may be encrypted by using at least one key. The concerned sensitive non-executable data relating to the concerned application(s) remains thus protected.

Such a key, like a key specific to the chip 10, is preferably a private key that is stored within the chip memory 104. The key may depend on a security domain, as an application(s) grouped together within a part of the chip memory 104 that shares a key with which the concerned application(s) is(are) associated. The key may be distinct from a key used for encrypting non-sensitive non-executable data relating to the concerned application(s). Only the chip 10 is able to decrypt the resulting encrypted sensitive non-executable data relating to the concerned application(s). Thus, this latter is confidential and accessible only to the chip which is able to access the used key.

A specific further protection for the sensitive non-executable data relating to the concerned application(s) may be added, in particular, to the most sensitive one. To add the specific further protection, a specific additional key, like a key specific to a security domain of the chip 10, is preferably used. The additional key is also stored within the chip memory 104. The additional key is preferentially used only when the chip user enters data that matches expected reference data, like a PIN or biometric data. The reference data is stored within the chip memory 104.

Preferably, the chip 10 is arranged to generate a file, as archive file or back-up file, by serializing a part of or all non-executable data relating to the concerned application(s). As part of non-executable application data, it may be at least the non-sensitive non-executable data relating to the concerned application(s). A quantity of data that is impacted to generate such a file is relatively small with respect to the overall data relating to the concerned application(s). It may be up to 20 per cent of the overall data relating to the concerned application(s).

The file may be generated on-the-fly and immediately output or exported from the chip 10.

A generation of such a file allows retrieving, i.e. restoring, all the non-sensitive non-executable data relating to the concerned application(s), when needed. The generated file may be later used for retrieving the processed application(s) while using a minimum amount of memory space of the chip 10 relating to the processed application.

The generated file comprises at least one object relating to one or several applications, such as at least one root object that is a reference object to which another object may be linked directly or indirectly, i.e. through one or several objects.

During the processing of each concerned application for its back-up, for instance during a generation of the file, at least one descriptor is added into the data kept within the file.

At least one added descriptor may be, once used, deleted during the processing of each concerned backed-up application for its restoration within the chip 10.

Different types of descriptor may be concerned.

A descriptor may be an identifier of the chip 10 from which the application data originates. Thus, a corresponding restoration of a back-up file is intended to be stored into the identified chip 10.

A descriptor may identify or mark a type of non-executable data relating to the application.

A descriptor may be a type of non-executable data relating to the application, like an object class.

A descriptor may be a fixed reference memory address within the chip memory 104 from which the corresponding executable data relating to the concerned application begins to be stored.

Alternatively, the descriptor may be a relative reference memory address within the chip memory 104 with respect to a known memory address or data for referring to a memory address, like a redirection table, as indirect redirection data. As known memory address, it may be a memory address at which the non-executable application data is stored and from which the referenced data, namely executable data, as code reference, or non executable data relating to the concerned application, to be retrieved is to be found. The redirection table allows retrieving within the chip memory 104 a descriptor, as a memory address at which executable data or non-executable data relating to the concerned application begins to be stored.

A code reference(s), as descriptor(s), is(are) added during the processing of each concerned application. The added code reference allows associating non-executable data relating to one application with at least one fixed (i.e. absolute) or relative reference memory address at which corresponding executable data begins to be stored. To add one code reference, a particular header is inserted, preferably before a block of data relating to an object, with data relating to a fixed reference memory address at which corresponding code (or executable data) begins to be stored.

Alternately, instead of adding a header with data relating to a fixed reference memory address at which corresponding code begins to be stored, a header is inserted, preferably before each block of data relating to an object, with data relating to a relative reference memory address at which corresponding code begins to be stored. Such a relative reference memory address is an offset between memory addresses at which the non-executable data and its corresponding code are stored. Such a header, as descriptor, includes description data that points directly or indirectly at a memory address at which executable data relating to the concerned application begins to be stored. An indirect pointing may involve a redirection table that is accessible through at least one coordinate, like an identified row and/or an identified column. When a redirection table is used, data relating to at least one identified coordinate within the redirection table is added after a corresponding header.

Likewise, a non-executable data reference(s), as descriptor(s), may be added or modified during the processing of each concerned application. The chip 10 associates thus an item of non-executable data relating to one application with at least one fixed (i.e. absolute) or relative reference memory address at which another item of non-executable data relating to the application begins to be stored.

To add an object reference, as an item of non-executable data reference, a header is inserted, preferably before a block of data relating to an object, with data relating to a fixed reference memory address at which another object, as another item of non-executable data reference, begins to be stored.

Alternately, instead of adding a header with data relating to a fixed reference memory address at which another object begins to be stored, a header is inserted, preferably before a block of data relating to an object, with data relating to a relative reference memory address at which corresponding code begins to be stored. Such a relative memory address is an offset between memory addresses at which an item and another item of non-executable data are stored. Such a header includes description data for pointing at a memory address at which non-executable data relating to the concerned application begins to be stored.

A descriptor that is added within the file that is being generated may be data relating to a size of a memory space that is needed for a restoration of one or several items of non-executable data relating to an application that has undergone the invention process.

A descriptor may be data relating to an identifier of a version of the code that the chip 10 has erased from the chip memory 104.

A descriptor that is added within the file that is being generated may be data relating to a size of a memory space that is needed for a restoration of each backed up data relating to an application that has undergone the invention process.

Once the file has been generated, the chip 10 may encrypt part, like only sensitive non-executable data relating to the concerned application(s), or all the concerned non-executable data relating to the concerned application(s) by using one or several keys, such as a private key relating to a chip. Such key(s) is(are) stored within the chip memory 104. The key(s) may be related to either a security domain in which one application or several applications are present or a service provider. The resulting file that is possibly encrypted is stored within the chip memory 104.

The chip 10 may be arranged to encode the resulting file in a predetermined specific manner.

The resulting file may be then exported or sent to an external entity, be it either a local entity, like a host device of the chip 10, or a remote entity, like a distant server. Once the file has been sent, the chip 10 is preferably configured to delete the stored file, so as to further save memory space. The saved memory space corresponds to a memory space occupied by the code and the non-sensitive non-executable data relating to the concerned application(s) that are both erased from the chip memory 104.

After a temporary back-up of non-executable data relating to one or several applications, for instance due to a punctual need of a memory space, a restoration of each backed up application data is carried out thanks to a corresponding target application. The target application for such a restoration of a backed-up application is supported by the chip 10 that is in connection with an external entity that accesses the code of at least the application that has undergone a back-up.

The external entity may manage a list of applications. For at least some application of the list, a list of different versions of the code of the application is registered, so as to possibly modify the application code with respect to the application code that the chip 10 has deleted. The chip 10 transmits preferably to the external entity a version identifier of the deleted application code.

The external entity may further analyze whether at least another version of the application code is compatible with the non-executable application data relating to the version of the deleted application code based on data provided by the chip 10, like one or several descriptors included within the file.

If the external entity detects that at least one version of the application code is compatible with the non-executable application data relating to the version of the deleted application code, then the external entity sends to the chip 10 one or several compatible versions, as a list, of the application code.

The chip user may select one application code version amongst several proposed compatible application code versions. Thus, the chip user may benefit from the restoration of the application in a flexible manner, so as to update or upgrade the application code.

The target application for a restoration of a backed-up application may be configured so as to address a predetermined memory space to be used for storing the application code to be registered into the chip memory 104.

Instead of a memory space predetermined by the target application for a restoration of a backed-up application, this latter may be configured so as to propose the chip user to define a memory space to be used for a storing of the application code.

The memory space dedicated to storing the application code may be distinct from a memory space of the chip memory 104 that registered the application code before its removal during a processing of the application for its back-up.

Thanks to the target application for a restoration of a backed-up application, the chip 10 allows assembling, i.e. when the application code that is to be imported is distinct from the one that has been deleted from the chip memory 104, or reassembling, i.e. when the application code that is to be imported is the one that has been deleted from the chip memory 104, all the needed application data. Such an assemblage or a re-assemblage of non-executable and corresponding executable data relating to each concerned application allows the chip user to avoid to personalize it since she(he) retrieves the corresponding non executable data during a restoration of the concerned application. The chip microprocessor 102 is able to run the thus restored application(s) possibly while executing another application code.

Figure 2 shows an example of a system 20 for processing application data.

The system 20 for processing application data includes the chip 10 and a mobile (tele)phone 22, as host device, that is coupled to the chip 10.

For example, instead of a phone, the host device may be constituted by a Portable Digital Assistant (or PDA), a game console, a portable TeleVision (or TV), a tablet computer, a palm-top computer, a laptop computer, a netbook, a tablet computer, a portable Personal Computer (or PC) and/or any other computer device.

As to the host device, it may be any device including one or several microprocessors, as means for processing data, comprising (or being connected to) an antenna 222 for exchanging data with outside, comprising (or being connected to) a Man Machine Interface (or MMI), like a keyboard 224, a loudspeaker (not represented) and/or a display screen 226, as means for interfacing with a user, comprising one I/O interface(s), and comprising (or being connected to) one or several memories (not represented), as means for storing data.

The phone 22 is connected preferably, through a contact or contact-less bi-directional link 21, to the chip 10. As a contact-less link, it may be a short range radio-frequency link relating to a Near Field Communication that allows exchanging data typically up to 20 cm between the phone 22 and the chip 10.

The phone 22 and the chip 10 may use Application Protocol Data Unit, as protocol for exchanging data.

The chip 10 uses the phone 22, so as to benefit from its MMI and its wireless capacity for exchanging data with the server 26.

The phone 22 is connected, through the antenna 222 and a long range radio-frequency link 23, to a mobile radio-communication network 24.

For simplicity reason, only one network 24 is schematically represented. However, the phone 22 may be connected, through the antenna 222 (and/or other antenna(s)), to a plurality of networks that use one or several wire and/or wireless technologies.

The network 24 may be constituted by a GSM, a UMTS, a CDMA and/or a Long Term Evolution (or LTE) type network(s). Such a network list is not exhaustive but only for exemplifying purposes.

A remote server 26 is connected, through a wire bi-directional link 25, to the network 24.

The server 26 may be operated by either a mobile radio-communication network operator or on its behalf, a bank operator and/or a service provider or on its behalf.

The server 26 to be addressed is identified within data stored within the chip memory 104. The server 26 may be identified by an Uniform Resource Identifier (or URI), like an Uniform Resource Locator (or URL), as server identifier.

The server 26 comprises one microprocessor(s), as means for processing data and one I/O interface(s). The server 26 may include or be connected to a memory, as means for storing data. The memory stores data relating to one or several applications and an application(s) for managing application data.

The server 26 is hosted by a computer. The server 26 may be dedicated to running an application(s) for managing application data. The application(s) for managing application data may include an application for backing up application data and an application for restoring an application. The application for restoring an application includes a restoration of backed up application data, namely non executable data relating to an application. The application for restoring an application may include a change of a version of the application code. The version of the application code that is sent to the chip 10 is thus distinct from the application code version that is erased from the chip memory 104.

The server 26 may be able in particular to analyze whether authentication data that is received from the chip 10 authorizes or forbids the requesting user to access a service(s) managed by the server 26.

The server 26 accesses preferably either a predetermined memory space or a memory space selected by the chip user into which executable data relating to one or a plurality of applications is stored.

Figure 3 shows an example of a message flow 30 that involves notably the chip 10 and the server 26.

For sake of simplicity, the phone 22 is not represented but, in the presented example, the chip 10 exchanges, through the phone 22, with the server 26.

In the explained example, the chip user desires to access, through the phone 22 MMI, a first target application (supported by the chip 10) for backing-up an application supported by the chip 10 at the server 26 side.

Alternately, instead of the chip user, the server 26 launches this first target application while indicating the target memory space within a memory accessible locally from the server 26.

According to another alternative, the first target application is triggered automatically when one or several conditions are satisfied. As condition, it may be a level of the occupied memory space has reached a predetermined threshold value, such as 95%, of the total memory space available within the chip memory 104.

It is assumed that the phone display screen 226 displays a list of application(s) offered from and/or through the chip 10.

Firstly, the chip user selects, through the phone 22 MMI, the first target application while further selecting an application to be backed-up.

The chip 10 triggers an execution of the selected target application while choosing one application to be managed and possibly further parameters, so as to reduce, at least in a temporary manner, the memory space occupied by the application within the chip memory 104. The chip user controls the application stored within the chip 10.

Optionally, the chip 10 checks whether the user is the true user, for example, by verifying that a PIN (or a biometrics print) entered by the user matches the PIN (or the biometrics print) stored within the chip 10, in order to authenticate the user before accessing the target application.

The chip 10 may be arranged to authenticate the server 26 before exchanging, further data with the server 26.

The chip 10 keeps sensitive non-executable application data within the chip memory 104.

The chip 10 removes from the chip memory 104 the application code.

The application is thus uninstalled from the chip 10 while its data is split into several data blocks. The chip 10 plays notably a role of a safe for the thus saved non-sensitive non-executable application data.

The chip 10 generates and stores an archive file by serializing only non-sensitive non-executable application data. All the objects belonging to the application is serialized so as to keep their organization. All objects keep their links to the original root object(s).

During the generation of the archive file, the chip 10 adds descriptors allowing to link application data items between each other, be it a non-executable data item with a executable data item or a non-executable data item with another non-executable data item.

Then, the chip 10 deletes the generated archive file stored within the chip memory 104.

Optionally, the chip 10 encrypts the generated archive file by using a key stored within the chip memory 104. The used key may be generated on a basis of several keys stored within the chip memory 104. Only the chip 10 that encrypts the generated archive file is able to decrypt the resulting encrypted data securing thus an access to the concerned data.

Then, the chip 10 sends to the server 26 a message(s) 32, such as one Short Message Service (or SMS) message(s), one Multimedia Message Service (or MMS) message(s) and/or an email(s) that comprises data relating to the generated archive file.

Once the server 26 has collected all the data relating to the generated archive file, the server 26 writes this latter within an accessible memory into either a predetermined memory space or a memory space selected by the chip user through the phone 22 MMI.

The chip user desires to access, through the phone 22 MMI, a second target application (supported by the chip 10) for restoring an application that is partially backed-up at the server 26 side.

It is assumed that the phone display screen 226 displays a list of application(s) offered from and/or through the chip 10.

When needed, the chip user selects, through the phone 22 MMI, the second target application while further selecting an application to be restored and either, by default, the original version of the application code or a change of the application code version (when compatible with the original version of the removed application code) that is chosen by the chip user.

The server 26 may verify that the backed-up application data does originate from the requesting chip 10.

The server 26 collects all locally stored backed-up data relating to the generated archive file related to the concerned application and the application code, be it the original version or a new version.

The server 26 sends to the chip 10 a message(s) 34, such as one SMS message(s), that comprises all collected data relating to the application.

The chip 10 may decrypt, when encrypted, the data relating to the generated archive file, so as to obtain clear data relating to the generated archive file.

The chip 10 generates original non-executable data relating to the application, by deserializing it from the restored archive file.

The chip 10 assembles (or re-assembles) the non-executable data relating to the application that is retrieved, on the one hand, for its sensitive part from the chip memory 104 and, on the other hand, for its non-sensitive part from the server 26 with the corresponding application executable data retrieved thanks to the added descriptors within the received file.

Once all the application data is (re-)assembled, the application is re-installed within the chip 10 and ready to be executed.

The invention solution is user friendly since the chip user controls a management of the application supported by the chip 10.

The invention solution may be used for saving volatile memory space of the chip 10 by storing, in a transitory manner, in a non-volatile memory space, transient objects. Then, the thus saved objects may be restored in a volatile memory space of the chip memory 104.

## Claims

1. A method (30) for processing application data, a first device (10) storing data relating to at least one application,
**characterized in that** the method comprises the following step:
- the first device deletes at least stored executable data relating to at least one application.

2. Method according to claim 1, wherein the first device stores at least a part of non-executable data relating to at least one application.

3. Method according to claim 1 or 2, wherein, during the processing of at least one application, the first device associates, for each application, a first part of non-executable data relating to one application with at least one fixed reference memory address at which corresponding executable data relating to the application begins to be stored.

4. Method according to any of claims 1 to 3, wherein, during the processing of at least one application, the first device associates, for each application, an item of non-executable data of a first part relating to one application with at least one relative reference memory address at which another item of non-executable data of the first part relating to the application begins to be stored.

5. Method according to any of claims 1 to 4, wherein the first device generates a file by serializing at least a first part of non-executable data relating to the at least one application.

6. Method according to claim 5, wherein the first device encrypts the generated file by using at least one key related to either a security domain or a service provider.

7. Method according to claim 5 or 6, wherein the first device sends to a second device (26) the generated file and the first device deletes a stored generated file.

8. Method according to any of claims 5 to 7, wherein the generated file includes at least one object relating to at least one application.

9. Method according to any of the claims 5 to 8, wherein the generated file includes non-sensitive non-executable data relating to at least one application.

10. A first device (10) for processing application data, the first device comprising means for storing data relating to at least one application,
**characterized in that** the first device is adapted to delete at least stored executable data relating to at least one application.
